Europäisches Patentamt

European Patent Office

Office européen des brevets

(11) Veröffentlichungsnummer: **0 514 621 A1**

# EUROPÄISCHE PATENTANMELDUNG

(21) Anmeldenummer: **92101503.8**

(22) Anmeldetag: **30.01.92**

(51) Int. Cl.5: **F16F 13/00**

(30) Priorität: **21.05.91 DE 4116577**

(43) Veröffentlichungstag der Anmeldung:
**25.11.92 Patentblatt 92/48**

(84) Benannte Vertragsstaaten:
**DE FR GB IT SE**

(71) Anmelder: **Firma Carl Freudenberg**
**Höhnerweg 2-4**
**W-6940 Weinheim/Bergstrasse(DE)**

(72) Erfinder: **Axel, Rudolph**
**Finkenweg 23**
**W-6140 Bensheim 3(DE)**

(54) **Hydraulisch dämpfendes Buchsenlager.**

(57) Hydraulisch dämpfendes Buchsenlager, umfassend zwei einander umschließende, im wesentlichen parallel zu einer gemeinsamen Achse (7) angeordnete Tragteile (1, 2), die durch einen Federkörper (3) aus gummielastischem Werkstoff nachgiebig aufeinander abgestützt sind, wobei der Federkörper (3) mindestens ein durch mindestens eine Dämpfungsöffnung (6) verbundenes, flüssigkeitsgefülltes Kammerpaar (4, 5) aufweist, dessen Kammern (4, 5) quer zu der Achse (7) im wesentlichen einander gegenüberliegend angeordnet sind, wobei der Federkörper (3) zur Bildung der Kammerpaare (4, 5) mit bei seiner Herstellung eingeformten, in Richtung seiner axialen Stirnseite offenen Ausnehmungen versehen ist und daß die Ausnehmungen durch einen nachträglich angebrachten, mit einem der Tragteile (1, 2) verbundenen Deckelverschluß (8) verschlossen sind, der relativ zu dem anderen Tragteil beweglich ist.

Fig. 1

EP 0 514 621 A1

Die Erfindung betrifft ein hydraulisch dämpfendes Buchsenlager, umfassend zwei einander umschließende, im wesentlichen parallel zu einer Achse angeordnete Tragteile, die durch einen Federkörper aus gummielastischem Werkstoff nachgiebig aufeinander abgestützt sind, wobei der Federkörper mindestens ein durch eine Dämpfungsöffnung verbundenes, flüssigkeitsgefülltes Kammerpaar aufweist, dessen Kammern quer zu der Achse einander gegenüberliegend angeordnet sind.

Ein solches Buchsenlager ist aus der EP 0 009 120 bekannt. Die Kammern der Kammerpaare werden dabei durch Ausnehmungen des Federkörpers gebildet, die herstellungsbedingt in radialer Richtung nach außen offen sind und verschlossen werden, indem das innere Tragteil einschließlich des Federkörpers nach der Flüssigkeitsfüllung der Kammern in ein flüssigkeitsundurchlässiges Außenrohr geschoben wird. Um hierbei eine ausreichende Festlegung des Federkörpers in bezug auf das Außenrohr zu gewährleisten, ist es erforderlich, den Federkörper im Bereich seines Außenumfanges durch ein unnachgiebiges Fensterrohr zu armieren. Die Herstellung und Anbringung des Fensterrohres ist jedoch mit besonderen Schwierigkeiten verbunden.

Der Erfindung liegt die Aufgabe zugrunde, ein Buchsenlager der eingangs genannten Art derart weiterzuentwickeln, daß sich eine vereinfachte Herstellbarkeit ergibt.

Diese Aufgabe wird erfindungsgemäß bei einem Buchsenlager der eingangs genannten Art mit den kennzeichnenden Merkmalen von Anspruch 1 gelöst. Auf vorteilhafte Ausgestaltungen nehmen die Unteransprüche Bezug.

Bei dem erfindungsgemäßen Buchsenlager ist es vorgesehen, daß der Federkörper zur Bildung der Kammerpaare mit bei seiner Herstellung eingeformten, in Richtung seiner axialen Stirnseite offenen Ausnehmungen versehen ist und daß die Ausnehmungen durch einen nachträglich angebrachten, mit einem der Tragteile verbundenen Deckelverschluß verschlossen sind, der relativ zu dem anderen Tragteil beweglich ist. Die Verwendung eines Fensterrohres ist hierdurch entbehrlich.

Der Federkörper kann zwei (in Umfangsrichtung ineinandergreifend angeordnete) Kammerpaare aufweisen, wobei die beiden Kammerpaare durch Ausnehmungen einander entgegengesetzter Öffnungsrichtung gebildet und durch mindestens zwei Deckelverschlüsse verschlossen sind. Die beiden Kammerpaare können durch Dämpfungsöffnungen einer voneinander abweichenden Dimensionierung verbunden oder durch Kammerwände begrenzt sein, die eine voneinander abweichende Elastizität haben. Es resultieren in diesem Falle Dämpfungseigenschaften, die in mindestens zwei senkrecht aufeinander stehenden, achsnormalen Richtungen unterschiedlich sind. In Abhängigkeit von der tatsächlichen Richtung der Relativbewegung tritt die eine oder die andere Däumpfungswirkung anteilig stärker in Erscheinung. Die Durchlässigkeit einer jeden Dämpfungsöffnung kann durch ein Ventil derart modifiziert sein, daß sich eine Modifizierung der Durchlässigkeit in den beiden Richtungen ergibt. Hierdurch läßt sich beispielsweise unter Verwendung einer kanalartig ausgebildeten Dämpfungsöffnung eine gute Dämpfungswirkung in einem breiten Frequenzbereich erzielen. Eine verbesserte Isolierung akustisch störender Schwingungen läßt sich erzielen, wenn zwischen den beiden Kammern eines Kammerpaares eine leicht hin- und herbewegliche Trennwand vorgesehen ist. Diese kann zwischen Anschlägen und gegebenenfalls in einem Teilbereich der Dämpfungsöffnung angeordnet sein.

Das erfindungsgemäße Buchsenlager läßt sich besonders einfach herstellen, wenn die Dämpfungsöffnung die Kammern eines jeden Kammerpaares im Bereich der Mündung der jeweiligen Ausnehmungen verbindet und in axialer Richtung durch den Deckelverschluß begrenzt ist. Bei der Formgebung und Verfestigung des Federkörpers können als Folge hiervon Werkzeuge zur Anwendung gelangen, die frei von Hinterschneidungen und dadurch besonders einfach zu verwenden sind.

Nach einer vorteilhaften Ausgestaltung ist es vorgesehen, daß zumindest ein Kammerpaar vorgesehen ist, bei dem die erste Kammer einem überwiegenden Bestandteil des Profils des Federkörpers in axialer Richtung zumindest anteilig vorgelagert ist und bei dem die zweite Kammer und das Profil des Federkörpers sich in axialer Richtung im wesentlichen parallel zueinander erstrecken, bezogen auf eine jeweils übereinstimmende Radialebene. Bei Verwendung nur eines einzigen Kammerpaares, das gegebenenfalls nur durch eine einzige Dämpfungsöffnung verbunden ist, ergibt sich bei einer solchen Ausführung eine Dämpfungswirkung nicht nur bei einer radialen, sondern darüber hinaus auch bei einer axialen Relativverlagerung der durch den Federkörper verbundenen Tragteile. Für zahlreiche Anwendungsfälle ist das von großem Vorteil.

Bei einer solchen Ausführung eines Buchsenlagers hat es sich bewährt, wenn die erste Kammer durch eine Ausnehmung gebildet ist, die das Profil des Federkörpers im Bereich des den Deckelverschluß tragenden Tragteils mit einem Taschenfortsatz in radialer Richtung untergreift. Radiale Relativverlagerungen der Tragteile einer Amplitude von geringer Größe können hierdurch in besonders guter Weise isoliert werden.

Eine noch bessere Isolierung hochfrequenter Schwingungen, die in radialer Richtung eingeleitet werden, läßt sich erzielen, wenn bei einer solchen Ausführung die zweite Kammer durch eine einen Bestandteil des Federkörpers bildende Membran umschlossen ist und wenn die Membran von den übrigen Bestandteilen des Federkörpers im unbelasteten Zustand des Buchsenlagers durch einen Abstand getrennt ist. Die zweite Kammer ist bei einer solchen Ausführung zur drucklosen Aufnahme zusätzlicher Flüssigkeitsvolumina aus der ersten Kammer geeignet. Sie übernimmt somit während der bestimmungsgemäßen Verwendung die Funktion eines Ausgleichsraums im funktionstechnischen Sinne der sogenannten Einkammer-Hydrolager.

Der Federkörper kann mit einer Fortsetzung versehen sein, die zumindest eines der Tragteile auf der von dem anderen Tragteil abgewandten Seite zumindest teilweise überdeckt. Die Fortsetzung kann beispielsweise schichtartig gestaltet sein. Sie bewirkt nicht nur einen ausgezeichneten Korrossionsschutz des betreffenden Tragteils, sondern kann darüber hinaus dessen Festlegung in einem aufnehmenden Maschinenteil vereinfachen.

Als wesentliche Montagehilfe hat es sich erwiesen, wenn wenigstens eines der Tragteile als Verliersicherung mit zumindest einer in radialer Richtung vorstehenden, elastischen Haltekralle für ein sekundäres Maschinenteil versehen ist, beispielsweise eine Halteschraube. Die Haltekralle besteht zweckmäßigerweise aus gummielastischem Werkstoff und kann dadurch problemlos in eine Hinterschneidung des festzuhaltenden Maschinenteils eingerastet werden.

Das erfindungsgemäße Buchsenlager läßt sich unter Verwendung von einfachen Werkzeugen besonders kostengünstig handhaben und erzeugen. Es kann durch geringfügige Modifizierungen der verwendeten Werkzeuge an besondere Gegebenheiten des jeweiligen Anwendungsfalles problemlos angepaßt werden.

Die Erfindung wird nachfolgend anhand der als Anlage beigefügten Zeichnung weiter verdeutlicht. Es zeigen:

Figur 1 ein Buchsenlager der erfindungsgemäßen Art in längsgeschnittener Darstellung;

Figur 2 das Buchsenlager nach Figur 1 in einer Ansicht von oben mit abgenommenem Deckelverschluß.

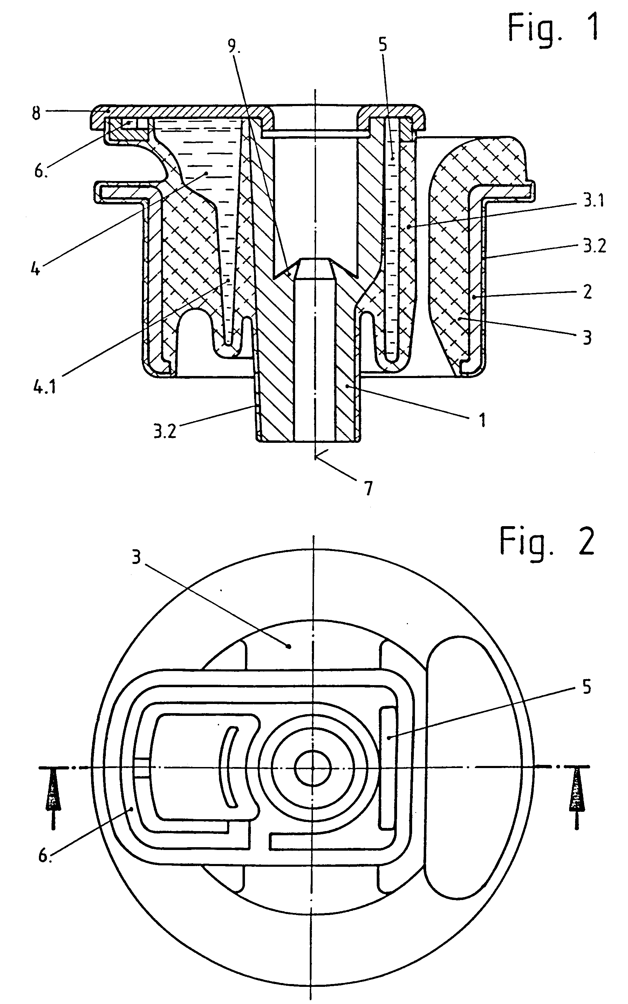

Das in den Figuren 1 und 2 gezeigte Buchsenlager umfaßt zwei einander umschließende, im wesentlich parallel zu einer Achse 7 angeordnete Tragteile 1, 2 aus metallischem Werkstoff, die durch einen Federkörper 3 aus gummielastischem Werkstoff nachgiebig aufeinander abgestützt sind. Der Federkörper 3 enthält ein flüssigkeitsgefülltes Kammerpaar 4, 5, das durch eine Dämpfungsöffnung 6 verbunden ist. Die Kammern 4, 5 sind quer zu der Achse 7 einander gegenüberliegend angeordnet. Sie werden durch Ausnehmungen gebildet, die bei der Formgebung und Verfestigung des Federkörpers 3 erzeugt und in Richtung von einer axialen Stirnseite des Federkörpers 3 offen sind. Einstückig mit dem inneren Tragteil 1 ist ein Formteil ausgebildet, welches die Dämpfungsöffnung 6 umschließt. Die Dämpfungsöffnung 6 verbindet die Kammern 4, 5 und ist herstellungsbedingt axial in der gleichen Richtung offen wie die Kammern 4, 5. Die Dämpfungsöffnung 6 und die Kammern 4, 5 sind vollständig mit einer hydraulischen Flüssigkeit gefüllt, beispielsweise mit einem Gemisch aus Glykol und Wasser. Sie sind in Richtung der Stirnseite durch einen gemeinsamen Deckelverschluß 8 flüssigkeitsdicht verschlossen. Der Deckelverschluß 8 ist unverrückbar an dem inneren Tragteil 1 festgelegt und relativ zu dem äußeren Tragteil 2 bewegbar.

Die Kammern 4, 5 haben ein voneinander abweichendes Profil. Die erste Kammer 4 ist einem überwiegenden Bestandteil des Profils des Federkörpers 3 in axialer Richtung vorgelagert, während sich im Bereich der zweiten Kammer 5 deren Profil und das Profil des Federkörpers 3 in axialer Richtung parallel zueinander erstrecken. Die zweite Kammer 5 ist durch eine Membran 3.1 begrenzt, welche im unbelasteten Zustand des Buchsenlagers einen Abstand von einer als Anschlag dienenden Gegenfläche des Federkörpers 3 aufweist. Die zweite Kammer 5 ist dadurch zur drucklosen Aufnahme zusätzlicher Flüssigkeitsvolumina geeignet.

Wird das innere Tragteil 1 in bezug auf das äußere Tragteil 2 in der Zeichenebene quer zur Achse 7 verschoben, so hat diese Relativbewegung die Hindurchpressung von Flüssigkeitsbestandteilen durch die Dämpfungsöffnung 6 zur Folge, wobei die Relativverlagerung der Flüssigkeit jeweils in die Kammer 4, 5 des vergleichsweise niedrigeren Druckes erfolgt. Die Dämpfungsöffnung 6 ist so dimensioniert, daß die die Bewegung verursachende Relativbewegung eine wirkungsvolle Dämpfung erfährt.

Wird demgegenüber das innere Tragteil 1 in bezug auf das äußere Tragteil 2 innerhalb der Zeichnungsebene parallel zur Achse 7 verschoben, so hat die diesbezügliche Relativbewegung in Abhängigkeit von deren jeweiliger Richtung abwechselnd eine Vergrößerung bzw. Verkleinerung nur der ersten Kammer 4, nicht hingegen der zweiten Kammer 5 zur Folge, wodurch die entsprechende Volumendifferenz über die Dämpfungsöffnung 6 abwechselnd in die zweite Kammer 5 verlagert bzw. aus der zweiten Kammer 5 entnommen wird. Beides ist mit der Erzielung einer Dämpfungswirkung verbunden. Bei dem vorliegenden Ausführungsbeispiel ist die zweite Kammer 5 durch eine einen Bestandteil des Federkörpers 3 bildende Membran 3.1 umschlossen, wobei die Membran 3.1 von den übrigen Bestandteilen des Federkörpers 3 im gezeigten, unbelasteten Zustand des Buchsenlagers durch einen Abstand getrennt ist. Die zweite Kammer 5 ist dadurch zur drucklosen Aufnahme bzw. Abgabe von zusätzlichen Flüssigkeitsvolumina geeignet.

Die erste Kammer 4 wird bei dem gezeigten Ausführungsbeispiel durch eine Ausnehmung gebildet, die das Profil des Federkörpers 3 im Bereich des den Deckelverschluß 8 tragenden Tragteils 1 mit einem Taschenfortsatz 4.1 in radialer Richtung untergreift. Der Taschenfortsatz 4.1 ist gleichermaßen mit hydraulischer Flüssigkeit gefüllt wie die beiden Kammern 4, 5 und die Dämpfungsöffnung 6. Das innere Tragteil 1 vermag sich hierdurch in bezug auf das äußere Tragteil 2 in radialer Richtung leichter zu bewegen, was die Erzielung einer guten Isolierwirkung in bezug auf die Einleitung entsprechend gerichteter Schwingungen begünstigt.

## Patentansprüche

1. Hydraulisch dämpfendes Buchsenlager, umfassend zwei einander umschließende, im wesentlichen parallel zu einer gemeinsamen Achse angeordnete Tragteile, die durch einen Federkörper aus gummielastischem Werkstoff nachgiebig aufeinander abgestützt sind, wobei der Federkörper mindestens ein durch mindestens eine Dämpfungsöffnung verbundenes, flüssigkeitsgefülltes Kammerpaar aufweist, dessen Kammern quer zu der Achse im wesentlichen einander gegenüberliegend angeordnet sind, dadurch gekennzeichnet, daß der Federkörper (3) zur Bildung der Kammerpaare (4, 5) mit bei seiner Herstellung eingeformten, in Richtung seiner axialen Stirnseite offenen Ausnehmungen versehen ist und daß die Ausnehmungen durch einen nachträglich angebrachten, mit einem der Tragteile (1, 2) verbundenen Deckelverschluß (8) verschlossen sind, der relativ zu dem anderen Tragteil beweglich ist.

2. Buchsenlager nach Anspruch 1, dadurch gekennzeichnet, daß der Federkörper (3) mindestens zwei Kammerpaare (4, 5) aufweist, daß die Kammerpaare durch einander entgegengesetzt geöffnete Ausnehmungen gebildet und durch mindestens zwei Deckelverschlüsse verschlossen sind.

3. Buchsenlager nach Anspruch 1 bis 2, dadurch gekennzeichnet, daß die Dämpfungsöffnung (6) die Kammern (4, 5) eines jeden Kammerpaares (4, 5) im Bereich der Mündung der Ausnehmungen verbindet und in axialer Richtung durch den Deckelverschluß (8) begrenzt ist.

4. Buchsenlager nach Anspruch 1 bis 3, dadurch gekennzeichnet, daß mindestens ein Kammerpaar (4, 5) vorgesehen ist, bei dem die erste Kammer (4) einem überwiegenden Bestandteil des Profils des Federkörpers (3) in axialer Richtung zumindest anteilig vorgelagert ist und bei dem die zweite Kammer (5) und das Profil des Federkörpers (3) sich im wesentlichen parallel zueinander und zu der Achse (7) erstrekken.

5. Buchsenlager nach Anspruch 4, dadurch gekennzeichnet, daß die erste Kammer (4) durch eine Ausnehmung gebildet ist, die das Profil des Federkörpers (3) im Bereich des den Deckelverschluß (8) tragenden Tragteils mit einem Taschenfortsatz (4.1) in radialer Richtung untergreift.

6. Buchsenlager nach Anspruch 4 bis 5, dadurch gekennzeichnet, daß die zweite Kammer (5) durch eine einen Bestandteil des Federkörpers (3) bildende Membran (3.1) umschlossen ist und daß die Membran (3.1) von den übrigen Bestandteilen des Federkörpers (3) im unbelasteten Zustand des Buchsenlagers durch einen Abstand getrennt ist.

7. Buchsenlager nach Anspruch 1 bis 6, dadurch gekennzeichnet, daß der Federkörper (3) mit einer Fortsetzung (3.2) versehen ist, die zumindest eines der Tragteile (1, 2) auf der von dem anderen Tragteil (2, 1) abgewandten Seite zumindest teilweise überdeckt.

8. Buchsenlager nach Anspruch 1 bis 7, dadurch gekennzeichnet, daß zumindest ein Tragteil (1, 2) mit zumindest einer in radialer Richtung vorstehenden, elastischen Haltekralle (9) für ein sekundäres Maschinenteil versehen ist.

9. Buchsenlager nach Anspruch 8, dadurch gekennzeichnet, daß die Haltekralle (9) aus gummielastischem Werkstoff besteht.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | PATENT ABSTRACTS OF JAPAN vol. 8, no. 140 (M-305)(1577) 29. Juni 1984 & JP-A-59 037 348 ( TOUKAI GOMU ) 29. Februar 1984 * Zusammenfassung * --- | 1-6,8 | F16F13/00 |
| Y | PATENT ABSTRACTS OF JAPAN vol. 12, no. 182 (M-702)(3029) 27. Mai 1988 & JP-A-62 292 941 ( MARUGO RUBBER ) 19. Dezember 1987 * Zusammenfassung * --- | 1-6,8 | |
| A | PATENT ABSTRACTS OF JAPAN vol. 8, no. 146 (M-307)(1583) 7. Juli 1984 & JP-A-59 043 239 ( TOUKAI GOMU ) 10. März 1984 * Zusammenfassung * --- | 1-3,8 | |
| A | DE-A-3 831 645 (PAGUAG) * Spalte 2, Zeile 61 - Zeile 63; Abbildungen 2,3 * --- | 7 | RECHERCHIERTE SACHGEBIETE (Int. Cl.5) |
| A | DE-A-3 831 644 (PAGUAG) * Spalte 3, Zeile 50 - Zeile 54; Anspruch 1; Abbildungen 1,2 * ----- | 1,3,5,8 | F16F |

Der vorliegende Recherchenbericht wurde für alle Patentansprüche erstellt

| Recherchenort | Abschlußdatum der Recherche | Prüfer |
|---|---|---|
| DEN HAAG | 24 JULI 1992 | NORDLUND J.O. |